# EUROPÄISCHE PATENTSCHRIFT

(11) **EP 0 688 587 B1**
(45) Veröffentlichungstag und Bekanntmachung des Hinweises auf die Patenterteilung: **10.11.1999**
(21) Anmeldenummer: 95109083.6
(22) Anmeldetag: 13.06.1995
(51) Int. Cl.: B01D 3/12, B01D 3/34, B01D 1/30, B01D 3/00, B01D 5/00, B01B 1/06

(54) **Verfahren und Vorrichtung zur quantitativen Anreicherung von flüchtigen Verbindungen durch Kapillar-Destillation**
Process and apparatus for quantitative enrichment of volatile compounds by capillary distillation
Procédé et dispositif pour l'enrichissement quantitative de composés volatiles par distallation capillaire

(30) Priorität: 21.06.1994 DE 4421627
(43) Veröffentlichungstag der Anmeldung: 27.12.1995
(73) Patentinhaber: EPPENDORF-NETHELER-HINZ GMBH, D-22339 Hamburg (DE)
(72) Erfinder: Giesselmann, Günter Dr., Diplom-Chemiker, D-63150 Heusenstamm (DE)
(74) Vertreter: Siemons, Norbert, Dr.-Ing. Patentanwälte Hauck, Graalfs, Wehnert, Döring, Siemons

(56) Entgegenhaltungen:
- DE-A- 3 616 309
- DE-C- 558 462
- DE-C- 568 667
- GB-A- 612 592
- US-A- 4 458 748
- PATENT ABSTRACTS OF JAPAN vol. 15 no. 56 (C-804) ,8.Februar 1991 & JP-A-02 284601 (NIPPON SEKIEI GLASS KK) 22.November 1990,
- PATENT ABSTRACTS OF JAPAN vol. 7 no. 37 (M-193) ,15.Februar 1983 & JP-A-57 187555 (MATSUSHITA DENKI SANGYO KK) 18.November 1982,
- PATENT ABSTRACTS OF JAPAN vol. 9 no. 14 (M-352) ,22.Januar 1985 & JP-A-59 161609 (MITSUBISHI DENKI KK)
- DATABASE WPI Section Ch, Week 9409 Derwent Publications Ltd., London, GB; Class D03, AN 94-072625 & SU-A-2 001 590 (ROSINTRANS BUSINESS COOP ASSOC) , 30.Oktober 1993

## Beschreibung

Nach dem Verfahren der EP 0248987 B1 ist ein Aufkonzentrierungsverfahren für flüchtige Verbindungen bekannt geworden, bei dem die Anreichung von flüchtigen Verbindungen aus diese enthaltenden flüssigen oder festen Substanzen ohne Verwendung von Hilfsstoffen in einem geschlossenen System möglich ist, wenn sie durch Erhitzen der Ausgangsstoffe bei höherer Temperatur und Kondensieren der flüchtigen Substanzen bei tieferer Temperatur in einer Anordnung durchgeführt wird, die aus einem Verdampfer- und Kondensationsgefäß, sowie eine sie verbindenden Kapillare mit einem Innendurchmesser von weniger als 1 mm besteht. Das Verfahren der EP 0248987 B1 erlaubte eine bis dahin nicht bekannte Anreicherung der flüchtigen Substanzen im Kondensat. Hierfür war jedoch ein verhältnismäßig großer Zeitaufwand nötig.

Aus den Patent Abstracts of Japan vol. 15 no. 56 (C-804) & JP-A-02284601 ist eine Verdampfungsvorrichtung bekannt, bei der zur Vermeidung von Siedeverzug mehrere Quarzglasplatten, die speziell aus einem Quarzbarren herausgeschnitten worden sind, auf die Oberfläche einer Glasvorrichtung aufgeschweißt worden sind. Hierdurch werden die Poren der Quarzglasplatte an der Unterseite geschlossen.

Davon ausgehend liegt der Erfindung die Aufgabe zugrunde, ein Verfahren und ein System zur quantitativen Anreicherung von flüchtigen Verbindungen durch Kapillar-Destillation zu schaffen, das beim Sieden eine kontinuierliche Entwicklung von Dampfblasen garantiert, ohne daß bauliche Veränderungen des Verdampfergefäßes oder zusätzliche externe Einrichtungen erforderlich sind.

Es wurde nun gefunden, daß eine quantitative Anreicherung von flüchtigen Verbindungen aus dem Makro- bis Submikro(ppm, ppb)-Bereich aus diese enthaltenden flüssigen oder suspendierten Substanzen durch Kapillar-Destillation dieser Substanzen und Kondensieren bzw. Absorbieren der flüchtigen Verbindungen in kurzer Zeit möglich ist, wenn die Anreicherung in einem System, das aus einem Verdampfergefäß, auf dessen Boden eine oder mehrere poröse Filterplatten lose liegen, die beim Sieden eine kontinuierliche und stetige Entwicklung von Dampfblasen garantieren, einem Kondensationsgefäß und einer diese Gefäße verbindenden Kapillare besteht, vorgenommen wird.

Filterplatten können aus den verschiedensten Materialien hergestellt sein, z.B. aus Glas, Quarz, Porzellan, Ton, Edelmetall und Kunststoffen wie Teflon, Peek (Polyetheretherketone) etc. Bevorzugt werden käufliche Filterplatten aus Borosilikatglas eingesetzt.

In dem erfindungsgemäßen System werden bevorzugt zylindrische Verdampfergefäße mit flachem Boden verwendet. Die Form des Verdampfergefäßes ist für die Wirksamkeit der Filterplatten Dampfblasen zu erzeugen, nicht entscheidend, auch auf einem gewölbten Boden sind diese voll wirksam.

Als Kondensationsgefäße werden bevorzugt Gewindefläschchen oder Rollrandgläser mit Bördelkappe eingesetzt. Die Größe ist von der Kondensatmenge abhängig.

Als Verschluß für die Kondensationsgefäße sind in der Mitte geschlitzte oder mit einer Bohrung versehene Silicon Septen besonders geeignet. Eine Kapillare läßt sich durch diese sehr leicht einführen. Außerdem garantieren diese Verschlüsse auch eine ausreichende Belüftung des Kondensationsgefäßes, um die Kapillardestillation ungehindert durchführen zu können.

In dem erfindungsgemäßen System hat sich außerdem eine Kapillare mit einem Innendurchmesser kleiner 1 mm als sehr günstig erwiesen.

Die in Frage kommenden Materialien für die Kapillaren richten sich nach den chemischen Eigenschaften der anzureichernden flüchtigen Verbindungen. Besonders geeignet sind Kapillaren aus geschmolzenem amorphen Siliciumdioxid, sog. "Fused Silica" Kapillaren, auch solche aus Kunststoffen wie Polyfluorethylen (Teflon) und Polyetheretherketon (PEEK) sind gut geeignet.

Für die Anreicherung basischer flüchtiger Verbindungen, wie z.B. Amine ist eine Untergrundbasizität der Kapillare notwendig, diese kann bei "Fused Silica" Kapillaren durch basisches Auslaugen "Leaching" einfach erreicht werden.

Die Länge der Kapillare und ihr Innendurchmesser haben einen gewissen Einfluß auf die Transportvorgänge. So eignet sich für die Kapillardestillation von labilen flüchtigen Verbindungen, die nicht unnötig lange höheren Temperaturen ausgesetzt sein sollen, eine kurze Kapillare mit mittlerem Innendurchmesser von 0,20 bis 0,32 mm. Unter kurzen Kapillaren werden solche von 100 bis 500 mm Länge verstanden.

Kapillaren von 500 mm oder vielen Metern Länge eignen sich dagegen überraschenderweise für fraktionierte Kapillar-Destillationen, z.B. für die Abtrennung von mit Wasser mischbaren organischen Lösungsmitteln. Der hierbei anfänglich auftretende Überdruck im Verdampfergefäß kann durch Vorwärmen der Kapillare vermieden werden. Bei kurzen Kapillaren ist eine Regulierung des Stofftransports durch Kühlung der Kapillare unterhalb Raumtemperatur möglich. Für sämtliche Kapillarlängen gilt, daß eine Erwärmung den Stofftransport durch die Kapillare erhöht, eine Abkühlung denselben dagegen vermindert. Für einfache nicht fraktionierte Kapillar-Destillationen haben sich Kapillarlängen von 100 - 500 mm, bevorzugt solche von 150 - 230 mm Länge bewährt.

Für eine optimale Funktion des erfindungsgemäßen Systems ist eine kontinuierliche und stetige Entwicklung von Dampfblasen in der siedenden Flüssigkeit erforderlich. Siedesteine sind für das erfindungsgemäße System unbrauchbar, da sie oft ihre Wirksamkeit verlieren oder überhaupt nicht wirksam sind. Überraschenderweise erwiesen sich poröse Filterplatten als sehr gut geeignet. Durch den Einsatz dieser Filterplatten werden soviel gleichmäßig verteilte Dampfblasen in der siedenden Flüssigkeit oder Suspension erzeugt, daß selbst Submikromengen flüchtiger Substanzen in kurzer Zeit ausgetrieben und quantitativ über die Kapillare in das Kondensationsgefäß befördert werden. In den Beispielen 1 bis 12 ist dies näher ausgeführt. Im Vergleich dazu ist z.B. die Cyanid-Bestimmung nach DIN 38405 sehr aufwendig: eine relativ große Probemenge von 100 ml wird benötigt und muß in einer komplizierten Apparatur unter gleichzeitigem Durchleiten von 20l/h Luft eine Stunde zum Sieden erhitzt werden, um die Blausäure quantitativ anreichern zu können. Das erfindungsgemäße System benötigt für den gleichen Vorgang maximal 1/10 der Probemenge und nur die halbe Versuchsdauer. Das erfindungsgemäße System kann einzeln oder batterieweise betrieben werden. Bei einer Anordnung von 6 Einheiten beispielsweise, erhöht sich der Probendurchsatz pro Zeiteinheit um den Faktor 6. In dem erfindungsgemäßen System kann somit auch auf zusätzliche Hilfsmaßnahmen wie z.B. Erzeugen von Vibrationen, siehe W. Dünges, Prächromatographische Mikromethoden, Verlag Dr. A. Hüthig, S. 86-87, verzichtet werden.

Selbst in wäßrigen Suspensionen, z.B. Aufschlämmungen von Bodenproben, erzeugt eine Filterplatte mit einem Porenbereich von 160 ... 250 µm noch ausreichend Dampfblasen, um ein gleichmäßiges Sieden zu gewährleisten.

Anstelle von einer Filterplatte können auch mehrere entsprechend kleinere Filterplatten in dem erfindungsgemäßen System eingesetzt werden. Die Gesamtfläche einer einzigen oder mehrerer Filterplatten sollte vorzugsweise 25 % der Bodenfläche des Verdampfergefäßes bedecken.

Wie aus Tab. 1 hervorgeht, bildet sich entsprechend der Innendurchmesser der Kapillaren im Innern des Verdampfergefäßes ein unterschiedlicher Überdruck. Unter derartigen Bedingungen war nicht zu erwarten, daß Filterplatten überhaupt eine Wirksamkeit zur Entwicklung von Dampfblasen haben würden. Siedesteine sind unter derartigen Bedingungen jedenfalls sehr problematisch. Siehe auch Ullmann Bd. 2/1 S. 71, 1961, zweiter vollständiger Absatz.

**Tabelle 1**

| Druckverhältnisse beim Siedepunkt von Wasser in verschlos senen und mit Kapillare und Manometer versehenen 20 ml Rollrandflaschen für Headspace-Analytik, Wandung 0,95 mm, Inhalt 10 ml Wasser. | |
|---|---|
| Kapillare, Innendurchmesser I.D. in mm | Überdruck in mbar |
| 0,20 | 210 |
| 0,25 | 160 |
| 0,32 | 140 |
| 0,53 | 80 |

Die Tab. 2 vermittelt einen Überblick über das Siedeverhalten von Wasser und Ethanol in Gegenwart von Filterplatten unterschiedlicher Porosität in verschlossenen 20 ml Rollrandflaschen, wie sie für die Headspace Analyse verwendet werden. Durch das Septum der Verschlußkappe wurden Fused Silica Kapillaren mit unterschiedlichen Innendurchmessern eingeführt und der Inhalt von 10 ml zum Sieden erhitzt. Aus der Tabelle wird deutlich, daß Filterplatten mit einem Porenbereich von 160....250 und 100....160 µm sowohl für Wasser als auch für Ethanol am besten geeignet sind, und zwar für den gesamten Bereich der Kapillarinnendurchmesser von 0,20 bis 0,53 mm. Bei den Filterplatten mit dem Porositätsbereich 40....100 µm sind die erzeugten Dampfblasen nicht mehr in der Lage, durch die Poren der Filterplatte hindurchzutreten, jedoch sind vom Rand der Filterplatte gleichmäßig aufsteigende Dampfblasen für viele Anwendungen von Vorteil, weil der Siedevorgang dadurch etwas gedämpfter verläuft.

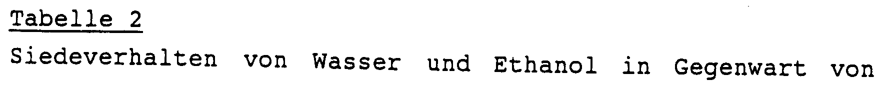

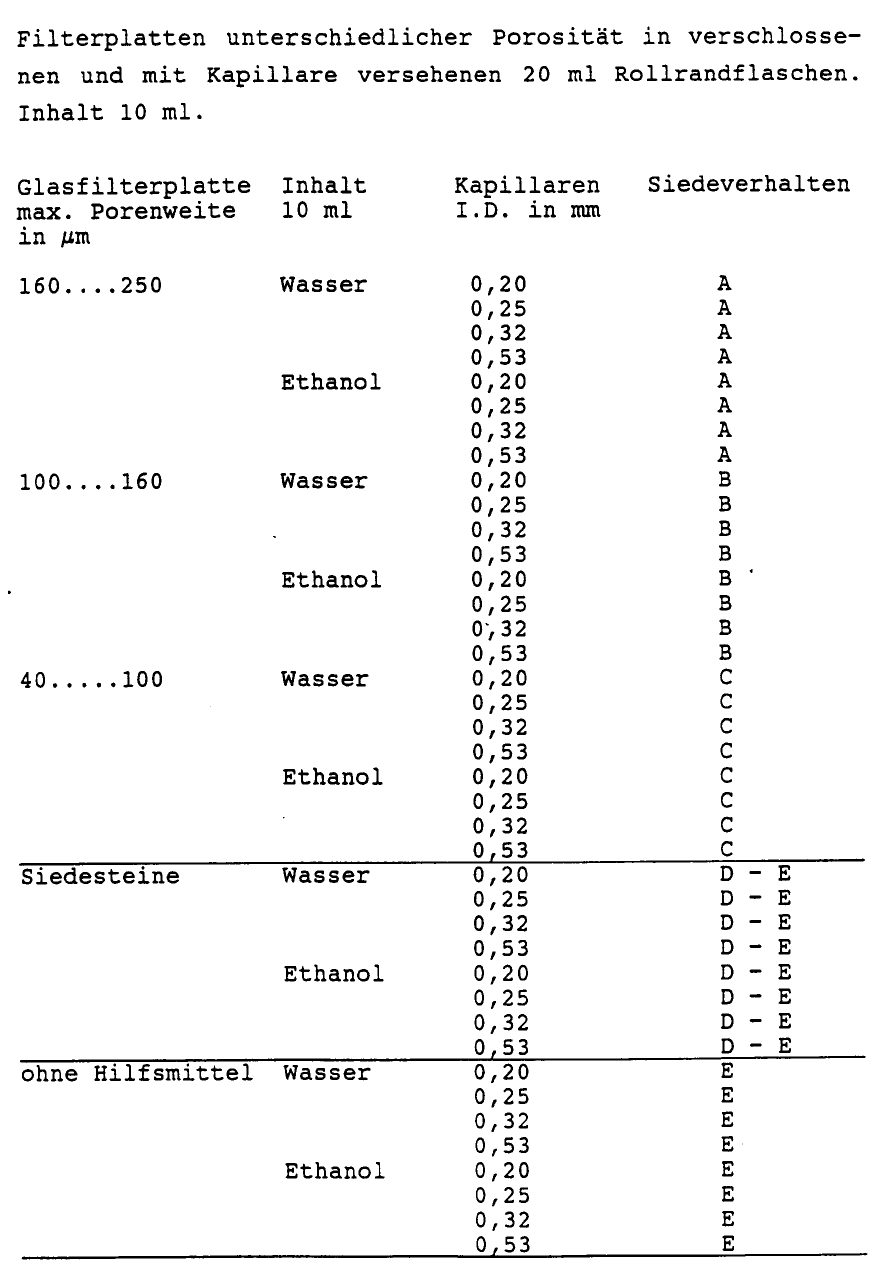

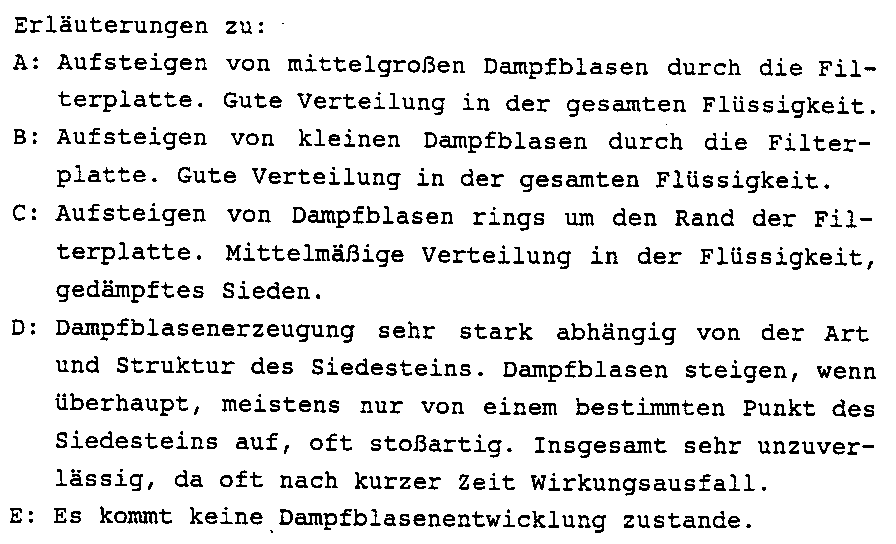

Durch das erfindungsgemäße Verfahren ist eine sichere quantitative Erfassung von flüchtigen Verbindungen aus den sie enthaltenden Substanzen möglich, und zwar ohne gasförmige Hilfsstoffe sowie ohne spezielle zusätzliche Anordnungen. Es eignet sich zur Isolierung von flüchtigen Substanzen wie sie beispielsweise in der Duftstoffindustrie, Aromaforschung, kosmetischen Industrie gefordert werden, sowie zur Isolierung flüchtiger Schadstoffe aus Abwässern, Bodenproben, aus pharmazeutischen Produkten, Produkten der Nahrungsmittelindustrie, aus Pflanzenextrakten, Pestiziden und für analytische Zwecke.

Ganz besonders ist das erfindungsgemäße Verfahren zur quantitativen Isolierung von Umwelt belastenden Schadstoffen wie z.B. freiem Cyanwasserstoff und aus Cyaniden bzw. komplexen Cyanidionen freigesetzter Cyanwasserstoff sowie zur quantitativen Isolierung von freiem Schwefelwasserstoff und aus Sulfiden freigesetzter Schwefelwasserstoff aus diesen enthaltenden Wässern und Böden aller Art, wie z.B. Industrieabwässer, Sickerwässer, Bodenproben und Schlämmen geeignet. Außerdem ist es zur quantitativen Isolierung von Inhaltsstoffen aus Sickerwässern wie z.B. chlorierten Kohlenwasserstoffen, aromatischen Kohlenwasserstoffen, chlorierten aromatischen und hydroaromatischen Kohlenwasserstoffen aus diesen enthaltenden Sickerwässern, bestens geeignet.

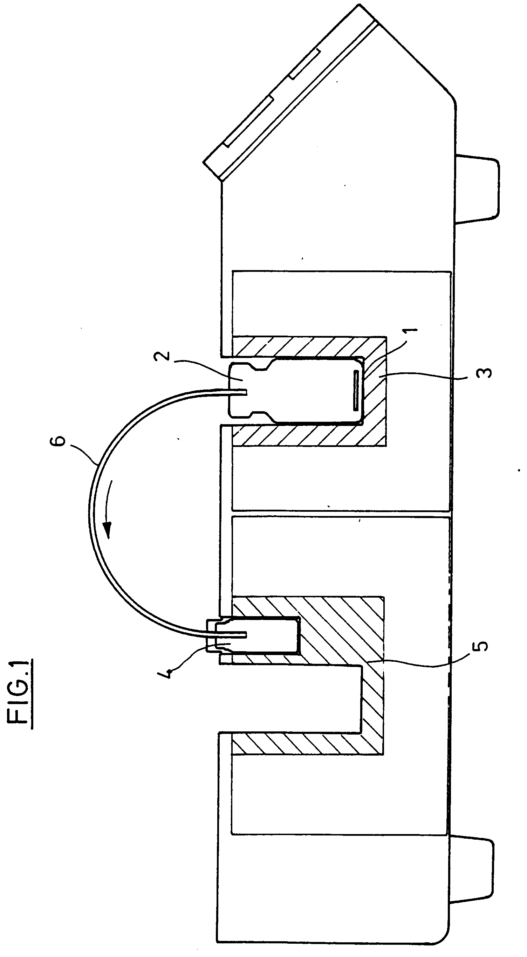

Das Gerät für die Kapillar-Destillation ist in Fig. 1 schematisch dargestellt: Das Verdampfergefäß 2 mit der Glas-Filterplatte 1 befindet sich in einem heizbaren Block 3; das Kondensationsgefäß 4 ist von einem Kühlblock 5 umgeben; die Kapillare 6 leitet den Gastransport von Gefäß 2 zu dem Kondensationsgefäß 4. Die Erfindung wird in den nachfolgenden Beispielen näher erläutert, bei denen die Anordnung entsprechend Fig. 1 eingesetzt wurde.

### Beispiel 1

Quantitative Isolierung von Cyanwasserstoff aus einer 10ppb Standard Cyanidlösung.

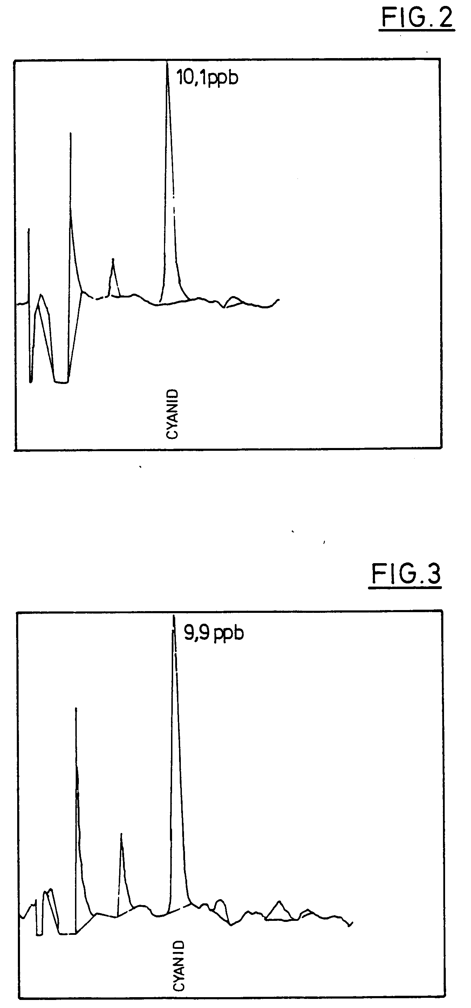

10 ml einer 10ppb Standard Cyanidlösung (pH 12) werden in ein druckstabiles Rolland-Borosilikatglas von 20 ml Inhalt pipettiert, eine Filterplatte aus Borosilikatglas, Porositätsbereich 100 bis 160 µm, eingelegt und zugebördelt. Anschließend wird durch die Bördelkappe eine 200 mm lange "Fused Silica" Kapillare mit Innendurchmesser 0,32 eingesetzt und das Verdampfergefäß in den noch kalten Heizblock positioniert. Als Kondensationsgefäß wird ebenfalls ein Rollrand-Borosilikatglas, Inhalt 10 ml, verwendet und 1 ml 1 molare Natronlauge, als Absorptionsmittel für die Blausäure, vorgelegt. Das Kondensationsgefäß wird im Kühlblock auf -2 °C gekühlt. Die Bördelkappe des Kondensationsgefäßes enthält ein Septum, das in der Mitte mit einer 1/16 Zoll Bohrung versehen ist, durch welche die Kapillare des Verdampfergefäßes leicht eingeführt werden kann. Die Kapillare wird in die Natronlauge eingetaucht. Durch Einspritzen von 1 ml einer Mischung aus Citratpuffer und Phosphorsäure/Hypophosphorigsäure (2 + 1) wird aus der zu analysierenden Lösung Blausäure in Freiheit gesetzt und durch Erhitzen zum Sieden in die Vorlage übergetrieben. Nach 20 Minuten wird der Siedevorgang abgebrochen. Der Inhalt der Vorlage wird genau auf 10 ml mit destilliertem Wasser aufgefüllt und mittels Ionenchromatographie an einer Anionenaustauschersäule und einem elektrochemischen Detektor, analysiert.
- Ergebnis:: Soll = 10,0 ppb
Gefunden = 10,1 ppb (vgl. Fig. 2)
Sofern nicht anders ausgeführt, wurde in den nachfolgenden Beispielen Verdampfergefäß, Filterplatte, Kapillare, Kondensationsgefäß, Säuregemisch zur Freisetzung von Cyan- bzw. Schwefelwasserstoff, Absorptionsmittel und Analytik nicht verändert.

### Beispiel 2

Quantitative Isolierung von Cyanwasserstoff aus einer 10 ppb Standard Cyanidlösung.

Entsprechend Beispiel 1 wird aus 10 ml einer 10 ppb Standard Cyanidlösung (pH 12) die Blausäure quantitativ in 20 Minuten isoliert.
- Ergebnis:: Soll = 10,0 ppb
Gefunden = 9,9 ppb (vgl. Fig. 3)

### Beispiel 3

Quantitative Isolierung von Cyanwasserstoff aus einer 2 ppb Standard Cyanidlösung.

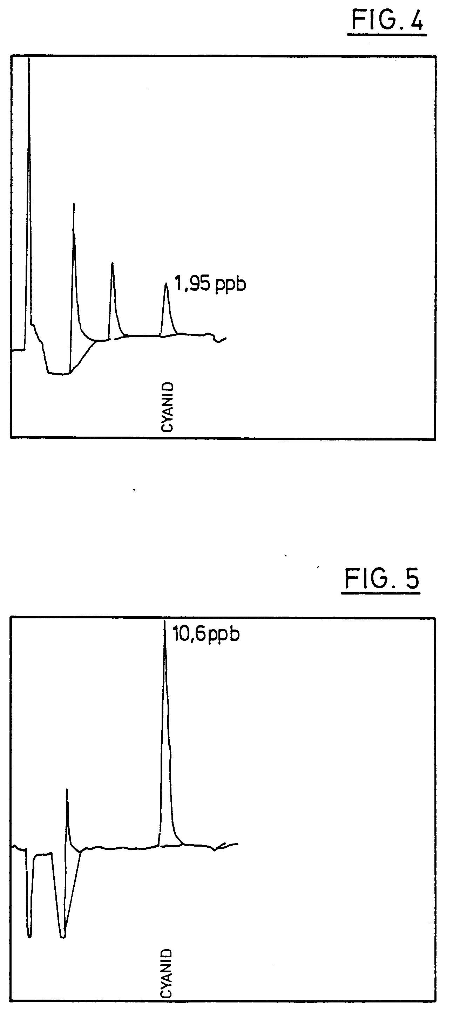

Entsprechend Beispiel 1 wird aus 10 ml einer 2 ppb Standard Cyanidlösung (pH 12) die Blausäure in 20 Minuten quantitativ isoliert.
- Ergebnis:: Soll = 2,0 ppb
Gefunden = 1,95 ppb (vgl. Fig. 4)

### Beispiel 4

Quantitative Isolierung von Cyanwasserstoff aus einer 10 ppb Standard Cyanidlösung.

Entsprechend Beispiel 1 wird aus 10 ml einer 10 ppb Standard Cyanidlösung (pH 12) die Blausäure quantitativ bereits nach 10 Minuten isoliert.
- Ergebnis:: Soll = 10,0 ppb
Gefunden = 10,2 ppb

### Beispiel 5

Quantitative Isolierung von Cyanwasserstoff aus komplexen Cyanidionen (Kaliumferrocyanid, K₄ [Fe(CN)₆].

Entsprechend Beispiel 1 werden 10 ml einer 11,1 ppb Cyanidlösung aus Kaliumferrocyanid K₄[Fe(CN)₆] eingesetzt. Die Mineralisierung des Komplexes ist nach 30 Minuten Kapillar-Destillation vollständig.
- Ergebnis:: Soll = 11,1 ppb
Gefunden = 10,6 ppb (vgl. Fig. 5)

### Beispiel 6

Quantitative Isolierung von Cyanwasserstoff aus komplexen Cyanidionen (Kaliumferrocyanid, K₄ [Fe(CN)₆].

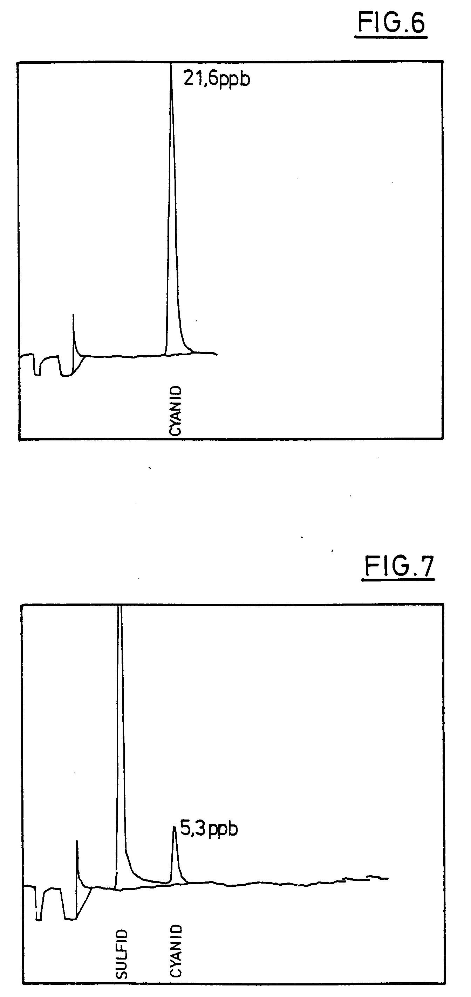

Entsprechend Beispiel 1 werden 10 ml einer 22,2 ppb Cyanidlösung aus Kaliumferrocyanid K₄ [Fe(CN)₆] eingesetzt. Die Mineralisierung des Komplexes ist nach 30 Minuten Kapillar-Destillation vollständig.
- Ergebnis:: Soll = 22,2 ppb
Gefunden = 21,6 ppb (vgl. Fig. 6)

### Beispiel 7

Quantitative Isolierung von Cyanwasserstoff in Gegenwart von Thiocyanationen (SCN⁻).

Entsprechend Beispiel 1 werden 5 ml einer 10 ppb Standard Cyanidlösung, 5 ml dest. Wasser und 100 µl einer 1000 ppm Kaliumthiocyanat Standardlösung (pH 12), entsprechend 10 ppm Thiocyanationen (1000facher Überschuß) eingesetzt und 30 Minuten einer Kapillardestillation unterworfen.
- Ergebnis:: Soll = 5,0 ppb
Gefunden = 5,3 ppb (vgl. Fig. 7)

Der starke Peak im Chromatogramm bei Retentionszeit 7,02 Min. zeigt Sulfidionen (ca. 40 ppb) an, mit denen das pro Analyse Kaliumthiocyanat verunreinigt ist.

### Beispiel 8

Simultane Isolierung von Cyan- und Schwefelwasserstoff, jeweils 10 ppb, aus entsprechenden Standardlösungen.

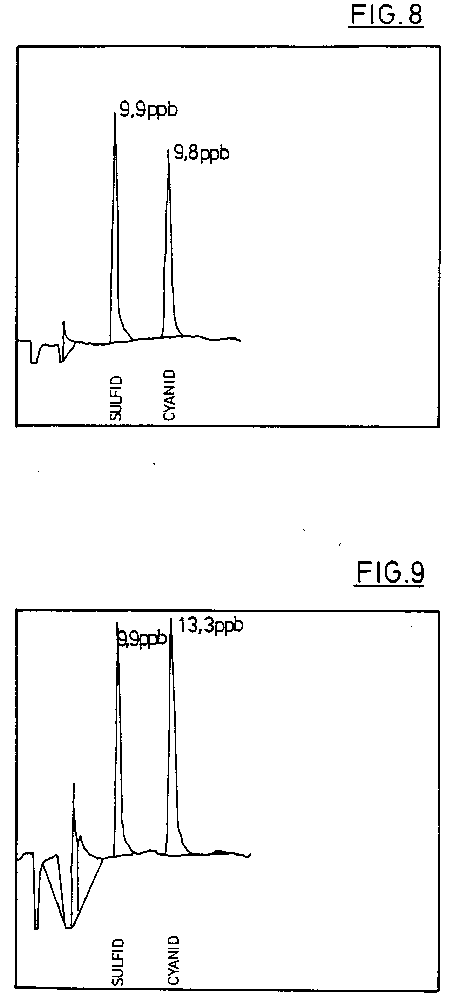

Entsprechend Beispiel 1 werden 10 ml einer 10 ppb Standard Cyanidlösung (pH 12) und 0,1 ml einer 1 ppm Standard Natriumsulfidlösung (pH 12) eingesetzt und 20 Minuten einer Kapillardestillation unterworfen.
- Ergebnis:: Soll Cyanid = 10 ppb, Soll Sulfid = 10 ppb
Gefunden Cyanid = 9,8 ppb, Gef. Sulfid = 9,9 ppb (vgl. Fig. 8)

### Beispiel 9

Quantitative Isolierung von Cyan- und Schwefelwasserstoff aus einem Industrieabwasser.

Entsprechend Beispiel 1 werden 10 ml Original-Industrieabwasser eingesetzt und 30 Minuten der Kapillar-Destillation unterworfen.

In dieser Zeit wird sowohl komplex gebundenes als auch leicht freisetzbares Cyanid, sowie Schwefelwasserstoff aus Sulfiden isoliert.
- Ergebnis:: Cyanid = 13,3 ppb
Sulfid = 9,9 ppb (vgl. Fig. 9)

### Beispiel 10

Quantitative Isolierung von Cyan- und Schwefelwasserstoff aus einem Industrieabwasser.

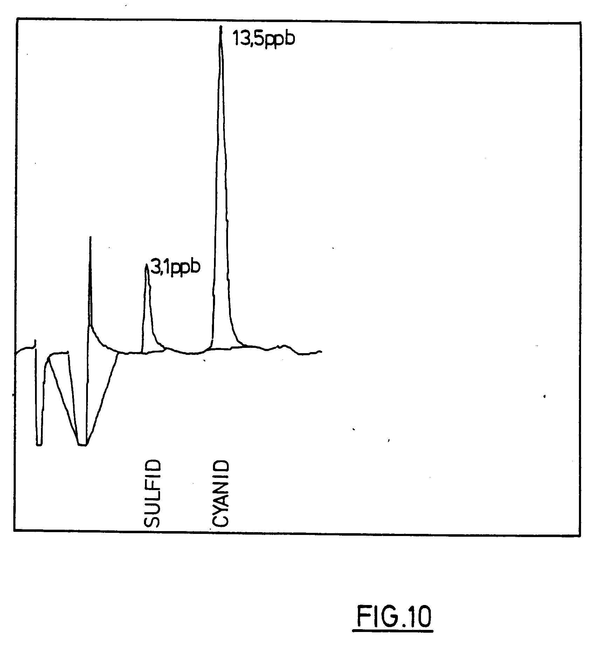

Entsprechend Beispiel 1 werden 10 ml Orginal-Industrieabwasser eingesetzt und 30 Minuten der Kapillardestillation unterworfen. In dieser Zeit wird sowohl komplex gebundenes als auch leicht freisetzbares Cyanid, sowie Schwefelwasserstoff aus Sulfiden quantitativ isoliert.
- Ergebnis:: Cyanid = 13,5 ppb
Sulfid = 3,1 ppb (vgl. Fig. 10)

### Beispiel 11

Quantitative Isolierung von flüchtigen Substanzen aus einem Sickerwasser.

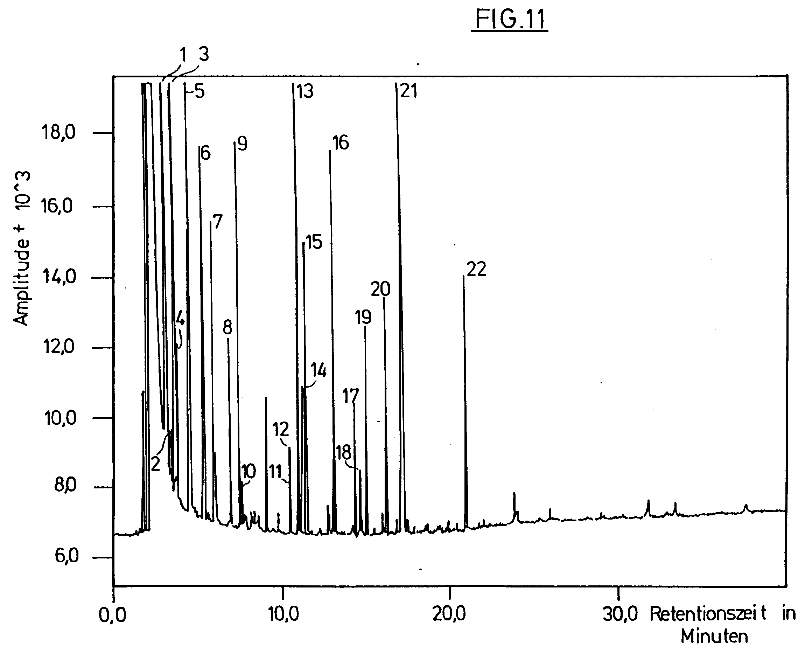

Entsprechend Beispiel 1 werden 2 ml Original-Sickerwasser mit 5 ml destilliertem Wasser verdünnt und ohne Zusatz des in Beispiel 1 verwendeten Säuregemisches 30 Minuten der Kapillardestillation unterworfen. Die flüchtigen Substanzen werden in n-Pentan, das auf -5 °C vorgekühlt wird, kondensiert.
Verdampfergefäß: Rollrand Borosilikatglas mit Bördelkappe
Filterplatte: Borosilikatglas, 40 bis 100 µm Porenbereich
Kapillare: "Fused Silica" i.D. 0,32 mm
Kondensationsgefäß: 10 ml Rollrand Borosilikatglas mit Bördelkappe
Absorptionsmittel: 2 ml n-Pentan, -5 °C gekühlt
Analytik: Gaschromatographie (vgl. Fig. 11)

In der Fig. 11 bedeuten:
1. cis-1.2-Dichlorethylen,
2. 1.1.1-Trichlorethan,
3. Benzol,
4. Trichlorethylen,
5. Toluol,
6. Chlorbenzol,
7. Tetrachlorethylen,
8. Ethylbenzol,
9. m-, p-Xylol,
10. o-Xylol,
11. Propylbenzol,
12. 1.3.5-Trimethylbenzol,
13. 1.2.4-Trimethylbenzol,
14. 1.2.3-Trimethylbenzol,
15. p-Dichlorbenzol,
16. o-Dichlorbenzol,
17. 1.3.5-Trichlorbenzol,
18. 1.2.4-Trichlorbenzol,
19. 1.2.3-Trichlorbenzol,
20. 1.2.3.5-Tetrachlorbenzol,
21. 1.2.3.4-Tetrachlorbenzol,
22. Pentachlorphenol

Konzentrations-Bereich: ppb - ppm

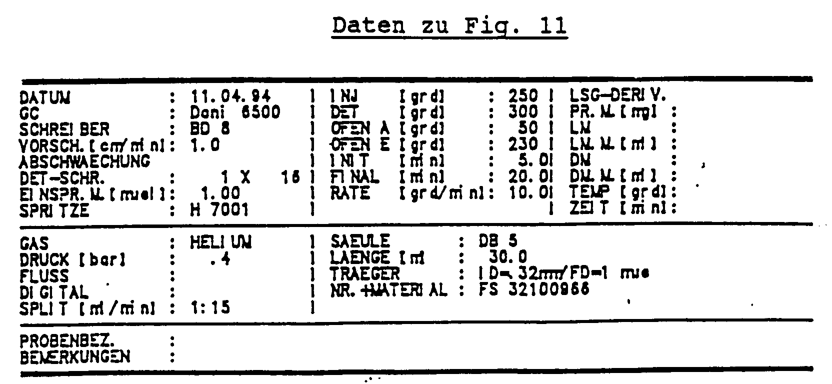

### Beispiel 12

Quantitative Isolierung von Ethanol aus einem Wasser-Ethanol-Gemisch durch fraktionierte Kapillar-Destillation.

Entsprechend Beispiel 1 wurde ein Gemisch aus 9 ml Wasser und 1 ml abs. Ethanol (0,789g) eingesetzt und 30 Minuten unter Verwendung einer 1200 mm langen Fused Silica Kapillare destilliert.
Verdampfergefäß: Rollrand Borosilikatglas mit Bördelkappe
Filterplatte: Borosilikatglas, 160 bis 250 µm Porenbereich
Kapillare: "Fused Silica" I.D.0,32 mm, Länge 1200 mm, Raumtemperatur
Kondensationsgefäß: 10 ml Rollrand Borosilikatglas mit Bördelkappe
Absorptionsmittel: keines
Analytik: Gaschromatographie
Ergebnis: 1,12 g Kondensat bestehend aus der gesamten Menge Ethanol (96 %ig), Rest = Wasser. Im Destillationsrückstand konnten gaschromatographisch nur noch Spuren Ethanol nachgewiesen werden.

## Patentansprüche

1. Verfahren zur quantitativen Anreicherung von flüchtigen Verbindungen aus diese enthaltenden flüssigen oder suspendierten Substanzen aus dem Makro bis Submikrobereich (ppb-ppm) durch Kapillar-Destillation dieser Substanzen und Kondensieren bzw. Absorbieren der flüchtigen Verbindungen, bei dem die Anreicherung in einem System, das aus einem Verdampfergefäß, einem Kondensationsgefäß und einer diese Gefäße verbindenden Kapillare besteht, vorgenommen wird, dadurch gekennzeichnet, daß auf dem Boden des Verdampfergefäßes eine oder mehrere poröse Filterplatten lose liegen, die beim Sieden der Substanzen eine kontinuierliche und stetige Entwicklung von Dampfblasen garantieren.

2. Verfahren nach Anspruch 1, dadurch gekennzeichnet, daß die Anreicherung in einem System mit einer Kapillare mit einem Innendurchmesser von kleiner 1 mm vorgenommen wird.

3. Verfahren nach Anspruch 1 und 2, dadurch gekennzeichnet, daß die Destillation mit Kapillaren der Innendurchmesser von 0,20 - 0,53 mm, bevorzugt 0,32 mm und Filterplatten, deren Porengrößen zwischen 160 und 250 µm liegen, durchgeführt wird.

4. Verfahren nach Anspruch 1 bis 2, dadurch gekennzeichnet, daß die Destillation mit Kapillaren der Innendurchmesser von 0,20 - 0,53 mm, bevorzugt 0,32 mm und Filterplatten, deren Porengröße zwischen 100 - 160 µm liegen, durchgeführt wird.

5. Verfahren nach Anspruch 1 bis 2, dadurch gekennzeichnet, daß die Destillation mit Kapillaren der Innendurchmesser von 0,20 - 0,53 mm, bevorzugt 0,32 mm und Filterplatten, deren Porengröße zwischen 40 und 100 µm liegen, durchgeführt wird.

6. Verfahren nach einem der Ansprüche 1 bis 5, dadurch gekennzeichnet, daß die Fläche einer einzigen oder die Gesamtfläche mehrerer Filterplatten mindestens 25 % der Bodenfläche des Verdampfers beträgt.

7. Verfahren nach einem der Ansprüche 1 bis 6, dadurch gekennzeichnet, daß der Stofftransport durch die Kapillare durch Temperaturänderung beeinflußt wird, und zwar durch Temperaturerhöhung vergrößert und Temperaturerniedrigung verkleinert wird.

8. Verfahren nach einem der Ansprüche 1 bis 7, dadurch gekennzeichnet, daß für die Destillation Kapillarlängen von 100 - 500 mm, bevorzugt 150 - 230 mm, eingesetzt werden.

9. Verfahren nach einem der Ansprüche 1 bis 8, dadurch gekennzeichnet, daß Kapillaren ab 500 mm Länge vorzugte für fraktionierte Kapillar-Destillation eingesetzt werden.

10. Verfahren nach einem der Ansprüche 1 bis 9, dadurch gekennzeichnet, daß Filterplatten aus Glas, Quarz, Porzellan, Ton, Edelmetall und Kunststoff eingesetzt werden.

11. Verfahren nach einem der Ansprüche 1 bis 10, dadurch gekennzeichnet, daß Filterplatten aus Borosilikatglas eingesetzt werden.

12. Verfahren nach einem der Ansprüche 1 bis 11, dadurch gekennzeichnet, daß eine Kapillare aus geschmolzenem amorphen Siliciumdioxid sog. "Fused Silica" Kapillare bzw. Kapillaren aus Teflon oder Polyetheretherketon (PEEK) Material eingesetzt werden.

13. Verfahren nach einem der Ansprüche 1 bis 12, dadurch gekennzeichnet, daß die Innenwand der "Fused Silica" Kapillare durch basisches Auslaugen (sog. Leaching) auf einen pH-Wert oberhalb pH 4,5 eingestellt wird.

14. Anwendung des Verfahrens nach einem der Ansprüche 1 bis 13 zur quantitativen Isolierung von freiem Cyanwasserstoff und aus Cyaniden bzw. komplexen Cyanidionen freigesetzter Cyanwasserstoff aus diesen enthaltenden Wässern und Böden aller Art, wie z.B. Industrieabwässern, Sickerwässern, Bodenproben und Schlämmen.

15. Anwendung des Verfahrens nach einem der Ansprüche 1 bis 13 zur quantitativen Isolierung von freiem Schwefelwasserstoff und aus Sulfiden freigesetzter Schwefelwasserstoff aus diesen enthaltenden Wässern und Böden aller Art, wie z.B. Industrieabwässern, Sickerwässern, Bodenproben und Schlämmen.

16. Anwendung des Verfahrens nach einem der Ansprüche 1 bis 13 zur quantitativen Isolierung von Inhaltsstoffen aus Sickerwässern wie z.B. chlorierten Kohlenwasserstoffen, aromatischen Kohlenwasserstoffen, chlorierten aromatischen- und hydroaromatischen Kohlenwasserstoffen aus diesen enthaltenden Sickerwässern.

17. Vorrichtung zur quantitativen Anreicherung von flüchtigen Verbindungen aus diesen enthaltenden flüssigen oder suspendierten Substanzen aus dem Makro bis Submikrobereich (ppb-ppm) durch Kapillar-Destillation dieser Substanzen und Kondensieren bzw. Absorbieren der flüchtigen Verbindungen mit einem Verdampfergefäß, einem Kondensationsgefäß und einer diese Gefäße verbindenden Kapillare, dadurch gekennzeichnet, daß auf dem Boden des Verdampfergefäßes eine oder mehrere poröse Filterplatten lose liegen, die beim Sieden eine kontinuierliche und stetige Entwicklung von Dampfblasen garantieren.

18. Vorrichtung nach Anspruch 17, dadurch gekennzeichnet, daß die Kapillare einen Innendurchmesser von kleiner 1 mm aufweist.

19. Vorrichtung nach Anspruch 17 und 18, dadurch gekennzeichnet, daß die Kapillaren Innendurchmesser von 0,20 - 0,53 mm, bevorzugt 0,32 mm und Filterplatten Porengrößen zwischen 160 und 250 µm aufweisen.

20. Vorrichtung nach Anspruch 17 bis 18, dadurch gekennzeichnet, daß die Kapillaren Innendurchmesser von 0,20 - 0,53 mm, bevorzugt 0,32 mm und Filterplatten Porengröße zwischen 100 - 160 µm aufweisen.

21. Vorrichtung nach Anspruch 17 bis 18, dadurch gekennzeichnet, daß die Kapillaren Innendurchmesser von 0,20 - 0,53 mm, bevorzugt 0,32 mm und Filterplatten Porengröße zwischen 40 und 100 µm aufweisen.

22. Vorrichtung nach einem der Ansprüche 17 bis 21, dadurch gekennzeichnet, daß die Fläche einer einzigen oder die Gesamtfläche mehrerer Filterplatten mindestens 25 % der Bodenfläche des Verdampfers beträgt.

23. Vorrichtung nach einem der Ansprüche 17 bis 22, dadurch gekennzeichnet, daß die Kapillare in einer steuerbaren Temperiereinrichtung angeordnet ist.

24. Vorrichtung nach einem der Ansprüche 17 bis 23, dadurch gekennzeichnet, daß die Kapillarlängen von 100 - 500 mm, bevorzugt 150 - 230 mm, betragen.

25. Vorrichtung nach einem der Ansprüche 17 bis 24, dadurch gekennzeichnet, daß die Längen der Kapillaren beovrzugt für fraktionierte Kapillar-Destillationen ab 500 mm betragen.

26. Vorrichtung nach einem der Ansprüche 17 bis 25, dadurch gekennzeichnet, daß Filterplatten aus Glas, Quarz, Porzellan, Ton, Edelmetall und Kunststoff eingesetzt sind.

27. Vorrichtung nach einem der Ansprüche 17 bis 26, dadurch gekennzeichnet, daß Filterplatten aus Borosilikatglas eingesetzt sind.

28. Vorrichtung nach einem der Ansprüche 17 bis 27, dadurch gekennzeichnet, daß eine Kapillare aus geschmolzenem amorphen Siliciumdioxid sog. "Fused Silica" Kapillare bzw. Kapillaren aus Teflon oder Polyetheretherketon (PEEK) Material eingesetzt ist.

29. Vorrichtung nach einem der Ansprüche 17 bis 28, dadurch gekennzeichnet, daß die Innenwand der "Fused Silica" Kapillare durch basisches Auslaugen (sog. Leaching) auf einen pH-Wert oberhalb pH 4,5 eingestellt ist.

## Claims

1. A method for the quantitative enrichment of volatile compounds from liquid or suspended substances containing these from the macro to the submacro region (ppb-ppm) by way of capillary distillation of these substances ad condensing or absorbing the volatile compounds, in which the enrichment is carried out in a system which consists of a evaporator vessel, a condensation vessel and a capillary tube connecting these vessels, characterised in that on the floor of the evaporator vessel one or more porous filter plates lie loosely which on boiling the substances ensure a continuous and constant development of steam bubbles.

2. The method according to claim 1, characterised in that the enrichment is carried out in a system with a capillary tube with a inner diameter smaller than 1 mm.

3. A method according to claim 1 and 2, characterised in that the distillation is carried out with capillary tubes of the inner diameter of 0.20 - 0.53 mm, preferably 0.32 mm and with filter plates whose pore size lies between 160 and 250 µm.

4. A method according to claim 1 and 2, characterised in that the distillation is carried out with capillary tubes of the inner diameter of 0.20 - 0.53 mm, preferably 0.32 mm and with filter plates whose pore size lies between 100 and 160 µm.

5. A method according to claim 1 and 2, characterised in that the distillation is carried out with capillary tubes of the inner diameter of 0.20 - 0.53, preferably 0.32 and with filter plates whose pore size lies between 40 and 100 µm.

6. A method according to one of claims 1 to 5, characterised in that the surface of an individual filter plate or the whole surface of several filter plates is at least 25 % of the floor surface of the evaporator.

7. A method according to one of the claims 1 to 6, characterised in that the material transport through the capillary tube is influenced by temperature change and specifically it is increased by temperature increase and reduced by temperature reduction.

8. A method according to one of the claims 1 to 7, characterised in that for the distillation capillary lengths of 100 - 500 mm, preferably 150 - 230 mm are used.

9. A method according to one of the claims 1 to 8, characterised in that the capillary tubes of 500 mm length or more are preferably used for fractionated capillary distillation.

10. A method according to one of the claims 1 to 9, characterised in that filter plates of glass, quartz, porcelain, clay, precious metal and plastics are used.

11. A method according to one of claims 1 to 10, characterised in that filter plates of borosilicate glass are used.

12. A method according to one of the claims 1 to 11, characterised in that a capillary tube of melted amorphous silicon dioxide, so-called "fused silica" capillary tube or tubes, of teflon or polyetheretherketon (PEEK) are used.

13. A method according to one of the claims 1 to 12, characterised in that the inner wall of the "fused silica" capillary tube is set to a pH-value above pH 4.5 by basic leaching.

14. An application of the method according to one of the claims 1 to 13 for the quantitative isolation of free hydrocyanic acid and hydrocyanic acid set free from cyanides or complex cyanide ions from waters and soils of all types containing these, such as e.g. industrial waste waters, infiltration waters, soil samples ad sludges.

15. The application of the method according to one of the claims 1 to 13 for the quantitative isolation of free hydrogen sulfide and hydrogen sulfide set free from sulfides from waters and soils of all types containing these, such as e.g. industrial waste waters, infiltration waters, soil samples and sludges.

16. The application of the method according to one of the claims 1 to 13 for the quantitative isolation of ingredients from infiltration waters such as e.g. chlorinated hydrocarbons, aromatic hydrocarbons, chlorinated aromatic and hydroaromatic hydrocarbons from infiltration waters containing these.

17. A device for the quantitative enrichment of volatile compounds from liquid or suspended substances containing these from the macro to the submacro region (ppb-ppm) by way of capillary distillation of these substances and condensing or absorbing the volatile compounds, with an evaporator vessel, a condensation vessel and a capillary tube connecting these vessels, characterised in that on the floor of the evaporator vessel one or more porous filter plates lie loosely which on boiling ensure a continuous and constant development of steam bubbles.

18. A device according to claim 17, characterised in that the capillary tube has an inner diameter smaller than 1 mm.

19. A device according to claim 17 and 18, characterised in that the capillary tubes have an inner diameter of 0.20 - 0.53 mm, preferably 0.32 mm and filter plates have a pore size between 160 and 250 µm.

20. A device according to claim 17 and 18, characterised in that that the capillary tubes have a inner diameter of 0.20 - 0.53 mm, preferably 0.32 mm and filter plates have a pore size between 100 and 160 µm.

21. A device according to claim 17 and 18 characterised in that in that the capillary tubes have an inner diameter of 0.20 - 0.53 mm, preferably 0.32 mm and the filter plates have a pore size between 40 and 100 µm.

22. A device according to one of claims 17 to 21, characterised in that the surface of an individual filter plate or the whole surface of several filter plates is at least 25 % of the floor surface of the evaporator.

23. A device according to one of the claims 17 to 22, characterised in that in that the capillary tube is arranged in a controllable temperaturising means.

24. A device according to one of the claims 17 to 23, characterised in that the capillary lengths are 100 - 500 mm, preferably 150 - 230 mm.

25. A device according to one of the claims 17 to 24, characterised in that the lengths of the capillary tubes preferably for tractionated capillary distillation are 500 mm or more.

26. A device according to one of the claims 17 to 25, characterised in that filter plates of glass, quartz, porcelain, clay, precious metal and plastics are used.

27. A device according to one of claims 17 to 26, characterised in that the filter plates of borosilicate glass are used.

28. A device according to one of the claims 17 to 27, characterised in that a capillary tube of melted amorphous silicon dioxide, so-called "fused silica" capillary tube or tubes, of teflon or polyetheretherketon (PEEK) are used.

29. A device according to one of the claims 17 to 28, characterised in that the inner wall of the "fused silica" capillary tube is set to a pH-value above pH 4.5 by basic leaching.

## Revendications

1. Procédé de concentration quantitative de composés volatils à partir de substances liquides ou en suspension les contenant en quantités allant de macroquantités à des sub-microquantités (parties par milliard-parties par million), par distillation capillaire de ces substances et par condensation ou bien absorption des composés volatils, dans lequel on effectue la concentration dans un système qui est constitué d'une cuve d'évaporation, d'une cuve de condensation et d'un tube capillaire reliant ces cuves, caractérisé en ce qu'une ou plusieurs plaques filtrantes poreuses sont disposées, de façon lâche, au fond de la cuve d'évaporation, qui, lors de l'ébullition des substances, garantissent un dégagement continu et constant de bulles de vapeur.

2. Procédé selon la revendication 1, caractérisé en ce qu'on effectue la concentration dans un système comprenant un tube capillaire ayant un diamètre intérieur inférieur à 1 mm.

3. Procédé selon les revendications 1 et 2, caractérisé en ce qu'on effectue la distillation avec des tubes capillaires ayant un diamètre intérieur de 0,20 à 0,53 mm, de préférence de 0,32 mm, et avec des plaques filtrantes dont les dimensions des pores sont comprises entre 160 et 250 µm.

4. Procédé selon la revendication 1 à 2, caractérisé en ce qu'on effectue la distillation avec des tubes capillaires ayant un diamètre intérieur de 0,20 à 0,53 mm, de préférence de 0,32 mm, et avec des plaques filtrantes dont les dimensions des pores sont comprises entre 100 et 160 µm.

5. Procédé selon la revendication 1 à 2, caractérisé en ce qu'on effectue la distillation avec des tubes capillaires ayant un diamètre intérieur de 0,20 à 0,53 mm, de préférence de 0,32 mm, et avec des plaques filtrantes dont les dimensions des pores sont comprises entre 40 et 100 µm.

6. Procédé selon l'une des revendications 1 à 5, caractérisé en ce que la superficie d'une plaque filtrante unique ou la superficie totale de plusieurs plaques filtrantes constitue au moins 25 % de la superficie du fond de l'évaporateur.

7. Procédé selon l'une des revendications 1 à 6, caractérisé en ce que le transport de substances par le tube capillaire est influencé par un changement de température, à savoir qu'il augmente sous l'effet d'une élévation de la température et diminue sous l'effet d'une diminution de la température.

8. Procédé selon l'une des revendications 1 à 7, caractérisé en ce qu'on utilise, pour la distillation, des longueurs de tubes capillaires de 100 à 500 mm, de préférence de 150 à 230 mm.

9. Procédé selon l'une des revendications 1 à 8, caractérisé en ce qu'on utilise des tubes capillaires ayant une longueur à partir de 500 mm, de préférence, pour une distillation capillaire fractionnée.

10. Procédé selon l'une des revendications 1 à 9, caractérisé en ce qu'on utilise des plaques filtrantes en verre, en quartz, en porcelaine, en argile, en métal précieux et en matière plastique.

11. Procédé selon l'une des revendications 1 à 10, caractérisé en ce qu'on utilise des plaques filtrantes en verre de borosilicate.

12. Procédé selon l'une des revendications 1 à 11, caractérisé en ce qu'on utilise un tube capillaire à base de dioxyde de silicium amorphe fondu, appellé tube capillaire en "silice fondue", ou des tubes capillaires en Téflon ou polyéther-éther-cétone (PEEK).

13. Procédé selon l'une des revendications 1 à 12, caractérisé en ce qu'on ajuste la valeur de pH de la paroi interne des tubes capillaires en "silice fondue" au-delà de pH 4,5 par lessivage basique.

14. Utilisation du procédé selon l'une des revendications 1 à 13 pour l'isolement quantitatif d'acide cyanurique libre et d'acide cyanurique libéré à partir de cyanures ou d'ions cyanures complexes, à partir d'eaux et de sols de tous types qui contiennent ceux-ci, comme, par exemple, des eaux usées industrielles, des eaux d'infiltration, des échantillons de sols et des boues.

15. Utilisation du procédé selon l'une des revendications 1 à 13 pour l'isolement quantitatif d'acide sulfhydrique libre et d'acide sulfhydrique libéré à partir de sulfures, à partir d'eaux et de sols de tous types qui contiennent ceux-ci, comme, par exemple, des eaux usées industrielles, des eaux d'infiltration, des échantillons de sols et des boues.

16. Utilisation du procédé selon l'une des revendications 1 à 13 pour l'isolement quantitatif de substances contenues dans des eaux d'infiltration, comme, par exemple, des hydrocarbures chlorés, des hydrocarbures aromatiques, des hydrocarbures chlorés aromatiques et hydro-aromatiques, à partir d'eaux d'infiltration contenant ceux-ci.

17. Dispositif pour la concentration quantitative de composés volatils à partir de substances liquides ou en suspension les contenant (voir les lignes 4 et 5 de la page 1), par distillation capillaire de ces substances et par condensation ou bien absorption des composés volatils, comprenant une cuve d'évaporation, une cuve de condensation et un tube capillaire reliant ces cuves, caractérisé en ce qu'une ou plusieurs plaques filtrantes poreuses sont disposées, de façon lâche, au fond de la cuve d'évaporation, qui, lors de l'ébullition, garantissent un dégagement continu et constant de bulles de vapeur.

18. Dispositif selon la revendication 17, caractérisé en ce que le tube capillaire a un diamètre intérieur inférieur à 1 mm.

19. Dispositif selon les revendications 17 et 18, caractérisé en ce que les tubes capillaires ont un diamètre intérieur de 0,20 à 0,53 mm, de préférence de 0,32 mm, et les plaques filtrantes ont des dimensions de pores comprises entre 160 et 250 µm.

20. Dispositif selon les revendications 17 à 18, caractérisé en ce que les tubes capillaires ont un diamètre intérieur de 0,20 à 0,53 mm, de préférence de 0,32 mm, et les plaques filtrantes ont des dimensions de pores comprises entre 100 et 160 µm.

21. Dispositif selon les revendications 17 à 18, caractérisé en ce que les tubes capillaires ont un diamètre intérieur de 0,20 à 0,53 mm, de préférence de 0,32 mm, et les plaques filtrantes ont des dimensions de pores comprises entre 40 et 100 µm.

22. Dispositif selon l'une des revendications 17 à 21, caractérisé en ce que la superficie d'une plaque filtrante unique ou la superficie totale de plusieurs plaques filtrantes constitue au moins 25 % de la superficie du fond de l'évaporateur.

23. Dispositif selon l'une des revendications 17 à 22, caractérisé en ce que le tube capillaire est disposé dans un dispositif réglable d'équilibrage de la température.

24. Dispositif selon l'une des revendications 17 à 23, caractérisé en ce que les longueurs des tubes capillaires sont de 100 à 500 mm, de préférence de 150 à 230 mm.

25. Dispositif selon l'une des revendications 17 à 24, caractérisé en ce que les longueurs des tubes capillaires sont à partir de 500 mm, de préférence, pour des distillations capillaires fractionnées.

26. Dispositif selon l'une des revendications 17 à 25, caractérisé en ce qu'on utilise des plaques filtrantes en verre, en quartz, en porcelaine, en argile, en métal précieux et en matière plastique.

27. Dispositif selon l'une des revendications 17 à 26, caractérisé en ce qu'on utilise des plaques filtrantes en verre de borosilicate.

28. Dispositif selon l'une des revendications 17 à 27, caractérisé en ce qu'on utilise un tube capillaire à base de dioxyde de silicium amorphe fondu, appellé tube capillaire en "silice fondu", ou des tubes capillaires en Téflon ou en polyéther-éther-cétone (PEEK).

29. Dispositif selon l'une des revendications 17 à 28, caractérisé en ce qu'on ajuste la valeur de pH de la paroi interne des tubes capillaires en "silice fondue" au-delà de pH 4,5 par lessivage basique.
